Europäisches Patentamt

European Patent Office

Office européen des brevets

(11) Veröffentlichungsnummer : **0 196 320**
**B1**

(12) # EUROPÄISCHE PATENTSCHRIFT

(45) Veröffentlichungstag der Patentschrift :
15.03.89

(21) Anmeldenummer : 85904799.5

(22) Anmeldetag : 24.09.85

(86) Internationale Anmeldenummer :
PCT/DE 85/00331

(87) Internationale Veröffentlichungsnummer :
WO/8602136 (10.04.86 Gazette 86/08)

(51) Int. Cl.⁴ : **F 16 L   5/02, H 02 G   3/22**

(54) **VORRICHTUNG ZUM ABDICHTEN VON WANDUNGSÖFFNUNGEN ODER KABEL- UND ROHR- DURCHFÜHRUNGEN.**

(30) Priorität : 25.09.84 DE 3435104
06.11.84 DE 3440512

(43) Veröffentlichungstag der Anmeldung :
08.10.86 Patentblatt 86/41

(45) Bekanntmachung des Hinweises auf die Patenterteilung : 15.03.89 Patentblatt 89/11

(84) Benannte Vertragsstaaten :
AT BE CH DE FR GB IT LI LU NL SE

(56) Entgegenhaltungen :
DE--A-- 2 945 749
FR--A-- 1 190 792
FR--A-- 2 407 414
US--A-- 4 237 667

(73) Patentinhaber : **ARMO GESELLSCHAFT FÜR BAUELE-
MENTEN, BAU- UND WOHNBEDARF GMBH
Reitzensteinstrasse 20
D-4350 Recklinghausen (DE)**

(72) Erfinder : **QUANTE, Heinrich
Behringstrasse 23
D-4350 Recklinghausen (DE)**

(74) Vertreter : **Schulte, Jörg, Dipl.-Ing.
Hauptstrasse 2
D-4300 Essen-Kettwig (DE)**

## Beschreibung

Die Erfindung betrifft eine Vorrichtung zum Abdichten und/oder Verschließen von vorzugsweise runden Öffnungen oder Durchführungen in Wandungen und Gehäusen mit einem in die Öffnung eingeführten Mantelrohr mit das Kabel oder Rohr einfassender Packung, wobei das Mantelrohr mit einem innenliegenden Elastikteil, das annähernd über die ganze Länge im Querschnitt veränderbar und dabei das Rohr einspannend ausgebildet und in der Öffnung eingespannt ist.

Derartige Vorrichtungen sind in verschiedenster Ausführung und für die verschiedensten Einsatzzwecke und Einsatzgebiete bekannt. Zum Verschließen einer Öffnung wie beispielsweise einer Aussparung oder einer Bohrung oder auch einer Ausgußöffnung werden derartige Vorrichtungen in Form eines in dieser festlegbaren Verschlusses ausgebildet. Als solche sind Korken, Drehspreizverschlüsse u. ä. bekannt. Bei der Durchführung von Rohren oder Kabeln durch eine Wandung haben derartige Vorrichtungen die Aufgabe, das Kabel oder Rohr begrenzt beweglich zu halten und gleichzeitig die Durchführung abzudichten. Solche Vorrichtungen sind beispielsweise in der Bautechnik bekannt, wo derartige Mantelrohre mit innenliegender Packung stets eine Schwachstelle in der Wandabdichtung darstellen und häufig dazu führen, daß Feuchtigkeit in unmittelbarer Nähe des Mantelrohres oder auch durch das Mantelrohr direkt eindringt. Grund hierfür ist meistens, daß die Mantelrohre bei der Herstellung des Mauerwerks zwar mit eingebaut, nicht aber in die eingentliche Abdichtungsmaßnahmen auf der Außenseite der Wand einbezogen werden. Das führt dann dazu, daß die Feuchtigkeit an der Nahtstelle Mantelrohr/Außenseite und Putz eindringen kann. Direkt am durchzuführenden Rohr oder Kabel sind sogenannte Rollringe angebracht, über die der Durchgang innerhalb des Mantelrohres so weit möglich abgedichtet werden soll. Nachteilig ist außerdem der aufwendige Aufbau derartiger Mantelrohre mit Packung.

Noch problematischer ist die Abdichtung bei im nachhinein angebrachten Wandungsdurchführungen. Auch hierbei ist in der Regel eine unzureichende Abdichtung vorhanden. Problematisch ist dabei weiter, daß bei auftretenden Setzungen oder sonstigen Bewegungen Schäden an der Vorrichtung dadurch auftreten, daß die Mantelrohre auf die Leitungen bzw. durchzuführenden Rohre einwirken und diese ggf. sogar zerstören. Aus diesem Grunde sind Wanddurchführungen entwickelt worden, die sowohl einen dichten wie auch einen wärmeisolierenden Abschluß erbringen. Diese bekannten Wandungsdurchführungen (DE-U-18 91 230) erlauben sowohl eine begrenzte Längsverschiebung wie auch eine Querverschiebung des durch die Durchführung hindurchgezogenen Rohres bzw. eine umgekehrte Bewegung des Mantelrohres. Hierzu ist eine Stopfbuchse vorgesehen, die das durchzuführende Rohr oder die Leitung umfaßt und fixiert und die ihrerseits mit einer Deckplatte fest verbunden ist, die senkrecht zur Rohrachse verläuft und die über geeignete Halterungen beweglich im Mantelrohr gehalten ist. Dazu ist eine aufwendige Konstruktion notwendig, mit vielteiligen Druckringen und Dichtungen und darüber hinaus auch noch Federn, die auf ein Ende der Deckplatte federnd einwirken. Aufgrund dieser aufwendigen Bauweise und der Kompliziertheit der Wandungsdurchführung haben sich derartige Vorrichtungen nicht durchsetzen können. Aus der Fr-A-24 07 414 sind aufblasbare Elastikteile, die das Rohr im Mantelrohr einspannen. Bei einer Beschädigung der Wandung des Elastikteils, verliert dies seine Wirkung. Eine zugbelastbare Führung ist so nicht gegeben. Wandungsdurchführungen, die begrenzt zugbelastbar sind, werden beispielsweise an Gehäusen wie denen für das Telefon oder für die Kaffemaschine oder an Verbindungteilen wie Steckern eingesetzt, um die durch das Kabel übertragenen Bewegungen und Zugbelastungen aufzunehmen und auszugleichen. Nachteilig ist dabei, daß diese Vorrichtungen, vorzugsweise lediglich Verdickungen des aufgenommenen Kabels, nur eine sehr begrenzte Zugentlastung ermöglichen.

Der Erfindung liegt die Aufgabe zugrunde, ein Rohr oder Kabel aufnehmende Öffnung wirksam abdichtende und zugleich zugbelastbar mit der Wand bzw. Wandung verbindbare Vorrichtung zu schaffen.

Die Aufgabe wird erfindungsgemäß dadurch gelöst, daß eine Vorrichtung zum Abdichten und/oder Verschließen von vorzugsweise runden Öffnungen oder Durchführungen in Wandungen und Gehäusen mit einem in die Öffnung eingeführten Mantelrohr mit das Kabel oder Rohr einfassender Packung, wobei das Mantelrohr mit einem innenliegenden Elastikteil, das ausgerüstet und in der Öffnung eingespannt ist.

Durch die besondere Ausbildung der erfindungsgemäßen Vorrichtung ist es möglich, in dem Mantelrohr, bei dem es sich ggf. auch um einen Teil des Gehäuses oder der Wand selbst handeln kann, eine vorhandene Öffnung entweder ganz zu verschließen oder darin ein durchzuführendes Rohr oder Kabel zugbelastbar und zugleich vollständig abdichtend zu halten. Das Elastikteil ist so ausgebildet, daß es sich bei entsprechender Verdrillung oder Verdrehung dicht an das Rohr oder das Kabel oder aber an die eigene Wandung anlegt, so daß der Durchgang bzw. die Öffnung abdichtend geschlossen ist. Besonders vorteilhaft ist dabei, daß das Elastikteil an die verbleibende Öffnung bzw. an das durchgeführte Kabel oder Rohr angepaßt werden kann und zwar ohne großen Aufwand, so daß ein immer dichter und sicherer Verschluß bzw. eine entsprechende Abdichtung gegeben ist. Da diese Abdichtung zugbelastbar ist, sind nachträgliche Schäden durch Belastungen entweder der Wand oder Wandung oder auch des Kabels oder Rohrs ungefährlich und haben keinen Einfluß auf die Wirkung der erfindungsgemäßen Vorrichtung. Die Vielseitigkeit der Vorrichtung ermöglicht den Einsatz in zahlreichen Gebieten und zwar unter Beibehaltung des geschilderten Prinzips, was erhebliche Vorteile bezüglich der Herstellung mit sich bringt. Das Elastikteil wird nach dem Durchführen des Rohres oder Kabels oder auch zu Abdichtung der vorhandenen Öffnung so lange durch Verdrehen bzw. das Drehen eines Endes gegen das festsitzende Ende bis das Kabel oder Rohr von der das Elastikteil bildenden Dichtungsbahn vollständig und fest eingespannt ist. Dabei kann durch die entsprechende Verdrehung dem Rohr oder dem Kabel in alle Richtungen mehr oder weniger Bewegungsfreiheit belassen werden, wodurch die vorteilhafte Zugbelastbarkeit gegeben ist. Vorteilhaft ist weiter die einfache Ausführungen praktisch alle möglichen durchzuführenden Kabel und Rohre zu halten und abzudichten. Praktisch jeder Querschnitt ist durch das Elastikteil abzudichten, wobei die Durchführung vorteilhaft elastisch und federnd ist. Damit können gleichzeitig auch auftretende Vibrationen aufgefangen und daran gehindert werden, in die Wandung übertragen zu werden. Somit ist eine vorteilhafte Geräuschdämpfung erreicht, die beispielsweise bei Wasserrohren oder Gasrohren bei der Durchführung in Wohnhäuser von erheblichem Vorteil ist. Aufgrund der schlauchförmigen Ausbildung ist eine Rundumdichtung erreicht, die wie erwähnt einfach herzustellen oder ggf. auch wieder rückgängig zu machen ist.

Nach einer zweckmäßigen Ausbildung der Erfindung ist vorgesehen, daß das Elastikteil als luftdicht geschlossener Doppelschlauch ausgebildet ist, der am frei zugänglichen Ende ein Ventil aufweist. Bei einer derartigen Ausbildung kann auf das Verdrehen bis zu einem gewissen Maß verzichtet werden, da über die Eingabe von Luft, Kleber, Kunststoffmasse, Kunstharz oder Brandschutzmasse der Hohlraum zwischen dem Mantelrohr und dem Rohr ausgefüllt und dadurch das Elastikteil gegen das durchzuführende Rohr oder Kabel oder gegen die eigene Wandung so gedrückt wird, daß bei nachfolgendem weiteren Verdrehen schnell ein dichter Verschluß bzw. die dichte Durchführung zu erreichen ist. Die Verwendung beispielsweise von Brandschutzmasse ist insbesondere in gefährdeten Bereichen bzw. bei Durchführung von gefährdende Medien führenden Leitungen bzw. Rohren von großem Vorteil. Gleichzeitig ist damit die Verwendung von Kunststoffen ohne weiteres möglich, da die Brandschutzmasse eine Gefährdung durch das Material der Folie ausschließt.

Eine zusätzliche Abdichtung gegenüber einem durchzuführenden Rohr, Schlauch oder Kabel wird nach einer Ausbildung dadurch erreicht, daß das schlauchförmige Elastikteil auf seiner dem Rohr zugewandten Innenseite eine spiralförmig verlaufende Lippendichtung aufweist. Diese Lippendichtung hat den weiteren Vorteil, daß bereits frühzeitig nach dem Einbringen des Verdrängungsmediums oder des Verdrehens eine Abdichtung erfolgt, und zwar in Form einer Art Labyrinthdichtung. Damit ist eine derartige Ausbildung auch besonders dort vorteilhaft zu verwenden, wo durch eine entsprechende Schnelldichtung das Eindringen oder weitere Eindringen von Feuchtigkeit oder Gas verhindert werden soll.

Eine weitere Ausbildung dient ebenfalls einer frühzeitigen Abdichtung oder aber einer Optimierung der erreichten Abdichtung und zwar indem in einer Ausbuchtung des Mantelrohres rechtwinklig zur Schlachachse wirksame ringförmige Pneus mit aktivierbarer Gaspatrone angeordnet sind. Diese Gaspatronen können entweder durch das Verdrehen aktiviert werden oder aber durch gezieltes Öffnen, um so ein gleichförmiges Einströmen des Gases in die Pneus abzusichern. Die Pneus drücken dann ringförmig auf das Elastikteil und damit das durchzuführende Kabel oder Rohr, ohne eine weitere Aufbringung von Verdrehrkräften zu behindern.

Um die Verdrehkräfte vereinfacht aufzubringen, kann es zweckmäßig sein, dem schlauchförmigen Elastikteil ein dieses spiralförmig umgebendes Rückhalteband zuzuordnen. Wird nach dem Durchführen beispielsweise eines Rohres dieses Rückhalteband herausgezogen, so verdreht dieses das Elastikteil und führt zu der gewünschten Abdichtung.

Neben den erwähnten und beschriebenen Wandungsdurchführungen und Verschlüssen für Öffnungen in Wandungen ist es auch vorteilhaft möglich, Behälter wie Flaschen mit der erfindungsgemäßen Vorrichtung zu verschließen. Hierzu ist das Elastikteil am Hals einer Flasche festgelegt und am anderen Ende mit einem auf dem Flaschenhals drehbeweglich angeordneten Drehteil verbunden. Auch hier wird somit durch Torsionsdichtung eine wirksame Abdichtung einer Flasche erreicht, wobei das Drehteil eine Innenbohrung aufweist und als Ausgießer ausgebildet ist. Damit kann eine derartige Flasche nach dem Einbringen des Inhaltes auch nach einer Teilentnahme des Inhaltes immer wieder wirksam verschlossen werden und zwar, indem einfach das Drehteilauf dem Flaschenhals so lange gedreht wird, bis das Elastikteil so weit tordiert ist, daß ein Durchgang nicht mehr gegeben ist. Weiter ist es möglich, das Drehteil lösbar mit dem Elastikteil zu verbinden, so daß beispielsweise eine derartige Flasche wieder befüllt werden kann, ohne daß es notwendig ist, ein neues Elastikteil einzubringen. Überraschend dabei ist, daß die so erreichte Dichtung eine vollständige, d. h. auch geruchsmäßig sichere Abdichtung erbringt und zwar bei Beibehaltung der einfachen und damit auch kostengünstigen Bauweise.

Zweckmäßigerweise sollte das Elastikteil eine dauerelastische, dünnwandige Folie sein. Erstens läßt sich ein solches Elastikteil gut verarbeiten, insbesondere zu der erfindungsgemäßen Dichtung und andererseits in derartige Folien vorteilhaft flexibel bzw. ermöglichen eine federnde Durchführung von Rohren und Kabeln.

Bei der schlauchförmigen Ausbildung des Elastikteils ist dieses zweckmäßig endseitig um das über die Wandung hinausgezogene Mantelrohr herumgestülpt und mit einer auf das Rohr verspannbaren Rohrschelle am Mantelrohr festzulegen. Damit ist eine leicht anzubringende und zugleich auch sichere Festlegung des schlauchförmigen Elastikteils erreicht. Es ergibt sich bei entsprechender Dichtung sowohl an dieser wie auch an der gegenüberliegenden Seite eine Trompetenwirkung der Dichtung, die allein schon für sich eine vorteilhafte Zugentlastung der Durchführung ergibt und die noch dadurch verbessert und erhöht wird, daß ein dauerelastisches Material Verwendung findet.

Zur drehbaren Festlegung des Elastikteils am anderen Ende ist erfindungsgemäß vorgesehen, daß das Elastikteil über das auf dem Mantelrohr drehbar angebrachte Drehteil gestülpt und daran oder in einer umlaufenden Nut der Klemmscheibe festgelegt ist. Nach Durchführen des Rohres oder des festzulegenden Kabels wird dieses Drehteil dann so lange gedreht, bis die gewünschte Dichtung erzielt ist. Das Drehteil wird dann festgelegt, so daß die einmal erzielte Dichtung auch auf lange Zeit gewährleistet ist. Die erfindungsgemäße Ausbildung ist einfach und zweckmäßig, zumal das Drehteil durch die entsprechende Umhüllung gleichzeitig auch noch gegen Korrosion u. ä. Schäden gesichert ist. Weiter wird das schlauchförmige Elastikteil auf der dem festgelegten Ende gegenüberliegenden Ende in einer drehbar auf das Mantelrohr aufgesetzten und hierzu eine umlaufende Nut aufweisende Klemmscheibe gehalten. Hier dient die Klemmscheibe zugleich zum Festlegen der Dichtungsbahn und zum Verdrehen des Elastikteils, so daß auch hiermit die gewünschte die gas- wasserdichte sowie federnde Durchführung gegeben ist.

Eine einfache Möglichkeit, die einmal aufgebrachte Torsionsdichtung zu erhalten, ist die, zwischen Drehteil bzw. Klemmscheibe und Mantelrohr eine einrastbare Rücklaufsicherung anzuordnen. Mit jedem Drehvorgang des Drehteils bzw. der Klemmscheibe spricht gleichzeitig die Rücklaufsicherung an, so daß auf diese Weise sehr genau und fein bemessen die dem durchzuführenden Rohr bzw. Kabel zu gewährende federnde Durchführung vorgegeben werden kann.

Bei durchzuführenden Rohren oder Leitungen mit hohem Gewicht oder bei besonders hoch aufzubringenden Kräften kann es zweckmäßig sein, das Elastikteil zu verstärken. Die Flexibilität des Elastikteils wird dabei vorteilhaft erhalten, indem ihm in Längsrichtung verlaufende oder spiralförmig angeordnete Verstärkungsdrähte zugeordnet sind. Bei der spiralförmigen Anordnung der Verstärkungsdrähte wird die Drehrichtung beim Aufbringen der Kräfte so vorgegeben, daß die Drahtspiralen enger werden, so daß ein Drahtbruch oder eine sonstige Beanspruchung nicht auftreten kann.

Eine leichte Anpassung an unterschiedliche Wandungen ist dadurch gegeben, daß das Mantelrohr erfindungsgemäß aus zwei ineinandersteckbar ausgebildeten Kurzrohren besteht, die gegeneinander abgedichtet sind und mittig einen Flanschring aufweisen. Unabhängig von der jeweiligen Wanddicke ist somit ein Eindringen von Feuchtigkeit aus dem Mauerwerk in den Innenraum der Wandungsdurchführung bzw. des Mantelrohres verhindert, wobei ein unbeabsichtigtes Auseinanderziehen auch später nach dem Einbau durch den Flanschring und damit die Festlegung der beiden Kurzrohre aneinander nicht möglich ist.

Um die vorne angesprochene nicht immer vorteilhafte Wandabdichtung, d. h. Abdichtung zwischen Wand und Wandungsdurchführung noch weiter zu verbessern, ist vorteilhafterweise dem Mantelrohr ein außen aufgesetzter, eine parallel zur Außenwand verlaufende Flanschwand aufweisender Flansch zugeordnet ist. Dieser Flansch kann einmal an der Wandung festgelegt und damit eine noch genauere Anordnung der Wandungsdurchführung insgesamt erreicht werden und zum anderen kann so an diesem Flansch die Flächendichtung angebracht werden, so daß eine durchgehende Wandabdichtung gewährleistet ist. Zweckmäßigerweise wird dabei die Flächendichtung auf den Flansch aufgeklebt.

Das Aufbringen der Drehkräfte und damit ein dichtes Umschließen des Rohres oder Kabels durch das Elastikteil ist vorteilhafterweise dann gegeben, wenn das Elastikteil wie erfindungsgemäß vorgesehen, innen und/oder außen mit einem Gleit- und/oder Dichtmittel versehen ist. Dabei können sowohl Kalkum wie auch Graphit wie auch echtes Fett eingesetzt werden, wobei für alle Teile zugleich eine Verbesserung der Flexibilität als auch der Dichtwirkung erreicht wird.

Insbesondere bei der Ersteinrichtung mit dem Bau des Gebäudes ist eine Wandungsdurchführung vorteilhaft, bei der das Mantelrohr mit innenliegendem Elastikteil in einem bezüglich der Länge den Abmessungen der Wandung anpaßbaren Kasten untergebracht ist, der in der Höhe dem Mauerwerksraster entsprechend bemaßt ist. Damit wird die Wand bzw. Wandungsdurchführung als Baueinheit auf Baustellen vorgehalten und kann im Mauerungszyklus ohne diese Arbeiten zu behindern mit eingemauert werden, um dann bei Bedarf für die Durchführung von Rohren oder Leitungen verwendet zu werden. Dabei kann durch eine Durchführungsabdeckung bei derartigen Kästen auch ohne weiteres sichergestellt werden, daß in der Zwischenzeit Schäden durch die belassene Durchführung oder Beanspruchung der Innenräume des Gebäudes nicht eintreten können.

Die Erfindung zeichnet sich insbesondere dadurch aus, daß eine Vorrichtung geschaffen ist, mit der sowohl Öffnungen wirksam, d. h. gas- und wasserdicht verschlossen werden können oder aber Durchführungen zu erreichen sind, die sowohl dicht wie auch zugleich zugbelastbar sind, weil das vorzugsweise schlauchförmige Elastikteil die Rohre oder Kabel entsprechend elastisch fixiert. Vorteilhaft ist diese elastische und federnde Durchführung auch deshalb, weil die unterschiedlichen Bauwerkskörper bzw. Bauteile so ohne einander zu beanspruchen Bewegungen ausführen können. Weiter ist es möglich, mit nur einer derart ausgebildeten Wandungsdurchführung Rohre mit unterschiedlichsten Durchmessern zu verwenden, weil das Elastikteil allen diesen Durchmessern angepaßt werden kann. Damit ist die Lagerhaltung wesentlich geringer, ganz davon abgesehen, daß auch die Herstellung wesentlich günstiger ist.

Es ist möglich, Durchführungen gleich beim Bau des Gebäudes mit vorzusehen und dann so lange vorzuhalten, bis sie für die entsprechende Durchführung von Rohren oder Kabeln benötigt werden. Vorteilhaft ist weiter, daß hier die Möglichkeit gegeben ist, Vibrationen und Geräusche so zu dämmen, daß nachteilige Beanspruchungen dadurch nicht auftreten. Schließlich stellt die erfindungsgemäße Wandungsdurchführung bzw. Vorrichtung zugleich auch eine Wärmeisolierung dar, weil für das schlauchförmige Elastikteil entsprechende Materialien vorgesehen sind. Als besonderer Vorteil ist schließlich noch einmal herauszustellen, daß eine Zugentlastung der durchgeführten Leitungen bzw. Rohre aufgrund der Dichtung erreicht wird, so daß derartige Führungen auch für andere Zwecke eingesetzt werden können, wo bisher gesonderte Zugentlastungen vorgesehen werden mußten. Die erfindungsgemäße Vorrichtung kann sowohl bei Flaschenverschlüssen wie erwähnt zum Einsatz kommen und hier sowohl einmal wie mehrmal verwendbar ausgebildet werden. Sowohl bei Einführungen von Kabeln in Elektrogeräte wie auch bei Telefongehäusen wird bei Einsatz der erfindungsgemäßen Vorrichtung eine vorteilhafte Zugentlastung erreicht bzw. eine zugbelastbare Einführung bzw. Durchführung geschaffen. Schließlich kann die im Prinzip gleich aufgebaute Vorrichtung auch bei Kleidung beispielsweise für Segler oder Angler zum Einsatz kommen, wo beispielsweise Ärmel, Hosenbeine und Hals wirksam durch die Torsionsdichtung verschlossen werden, ohne daß dabei die notwendige Elastizität verlorengeht. Gleiches gilt für eine Stiefelrandabdichtung sowie ähnliche Schuhverschlüsse. Schließlich dient eine entsprechende Dichtung gleichzeitig auch als Verbindungselement beispielsweise für Gartengeräte, d. h. für die Verbindung von Besen und Besenstiel oder zwei Schlauchteile oder zur Verbindung des Wechselwerkzeuges mit dem Griff bzw. dem Antrieb. Vorteilhaft kann die erfindungsgemäße Dichtung auch bei Tankverschlüssen zum Einsatz kommen, wo beim Einfüllen des Benzins das im Tank vorhandene und verdrängte Gas gesondert abgeleitet werden kann, ohne in die Atmosphäre zu entweichen. Gerade bei Großtanks kann so eine vorteilhafte Entlastung der Umwelt erreicht werden, da die die Umwelt belastenden Gasbestandteile durch die gesondere und sichere Abführung aufgefangen und unschädlich gemacht werden können.

Weitere Einzelheiten und Vorteile des Erfindungsgegenstandes ergeben sich aus der nachfolgenden Beschreibung der zugehörigen Zeichnung, in der bevorzugte Ausführungsbeispiele mit den dazu notwendigen Einzelheiten und Einzelteilen dargestellt sind. Es zeigen :

Fig. 1 ·eine Wandungsdurchführung für ein Rohr mit einem im nachhinein eingebrachten Vorbohrloch,

Fig. 2 eine Wandungsdurchführung kurz nach dem Durchziehen eines Kabels,

Fig. 3 eine Wandungsdurchführung, die bei der Herstellung des Mauerwerks bereits mit eingebracht worden ist,

Fig. 4 eine Wandungsdurchführung mit zusätzlich angebrachten Pneus,

Fig. 5 ein als Verschluß dienendes Elastikteil im Schnitt,

Fig. 6 einen Flaschenverschluß,

Fig. 7 eine Wandungsdurchführung mit aufblasbarem Elastikteil,

Fig. 8 eine weitere Ausführung einer Wandungsdurchführung mit aufblasbarem Elastikteil und

Fig. 9 einen Tankverschluß im Schnitt.

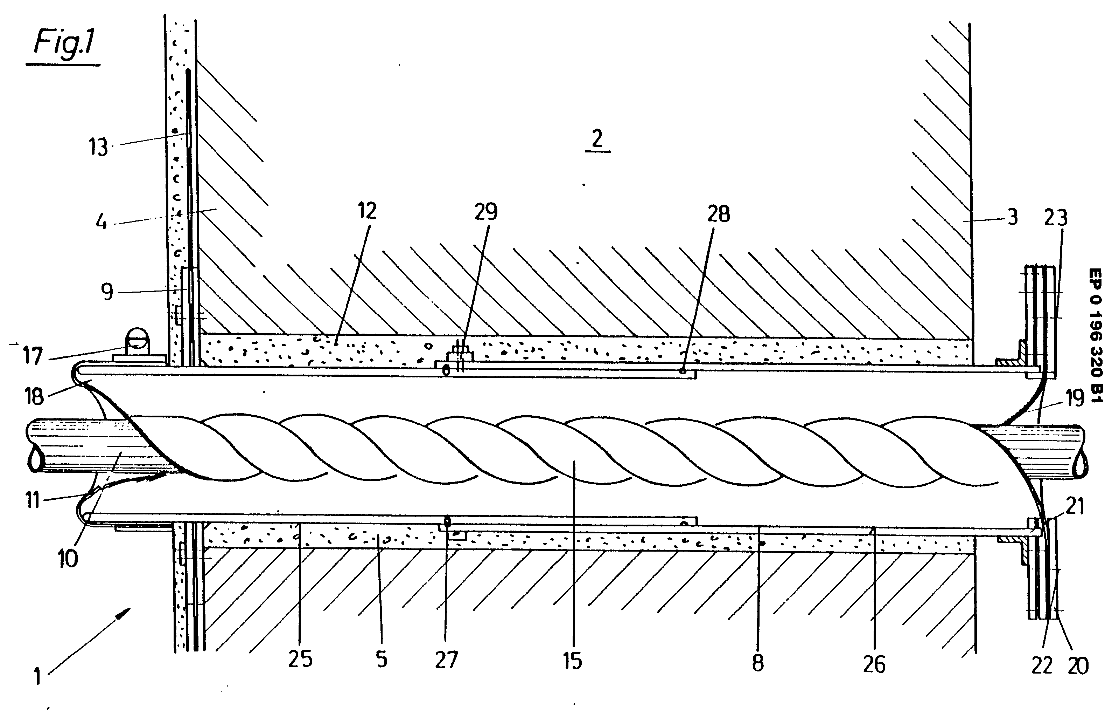

Bei der in Fig. 1 dargestellten ist in die bestehende Wandung 2 eine Öffnung 1 bzw. eine Bohrung eingebracht worden. Dadurch entsteht zwischen Innenwand 3 und Außenwand 4 eine Durchführung 5, in die ein Mantelrohr 8 eingeführt ist.

Das in die Durchführung 8 eingeschobene Mantelrohr 8 ist an der der Außenwand 4 zugeordneten Seite mit einem Flansch 9 ausgerüstet, über den die Flächendichtung 13 vorteilhaft auch im Bereich der Wandungsdurchführung diese integrierend angebracht, vorzugsweise aufgeklebt werden kann.

Durch das Mantelrohr 8 verläuft das Rohr 10, das, wie aus Fig. 1 zu entnehmen ist, durch das tordierte Elastikteil 11 sicher gehalten und fixiert ist. Das Mantelrohr 8 ist gegenüber der Wandung 2 durch die Hinterfüllung 12 isoliert und abgedichtet, während die Durchführung 5 im Inneren des Mantelrohres 8 durch die Dichtung 15 abgedichtet ist.

Die Dichtung 15 wird dadurch erreicht, daß das schlauchförmige Elastikteil 11 über die Rohrschelle 17 am Ende 18 sicher am Mantelrohr 8 festgelegt ist, während es am gegenüberliegenden Ende 19 über die Klemmscheibe 20 drehbar gehalten ist. Beim Drehen der Klemmscheibe 20 in der Nut 21 verdreht sich das schlauchförmige Elastikteil 11 und legt sich, wie Fig. 1 zeigt, dicht um das Rohr 10 herum. Die Festlegung des Elastikteils 11 an der Klemmscheibe bzw. in der Klemmscheibe 20 erfolgt mit Hilfe der Halteschrauben 22, 23.

Bei der in Fig. 1 gezeigten Ausbildung der Wandungsdurchführung steht das Mantelrohr 8 ein Stück über die Innenwand 3 vor. Dies kann dadurch verhindert werden, daß das Mantelrohr 8 selbst aus zwei Kurzrohren 25, 26 besteht, die ineinanderschiebbar ausgebildet sind. Über die Dichtringe 27, 28 sind diese Kurzrohre 25, 26 gegeneinander abgedichtet, so daß Feuchtigkeit durch die vorhandenen Spalte zwischen den beiden Kurzrohren nicht eindringen kann. Zur weiteren Sicherung ist der Flanschring 29 vorgesehen, über den die beiden Kurzrohre 25, 26 im vorgesehenen Einschubbereich festgelegt werden können.

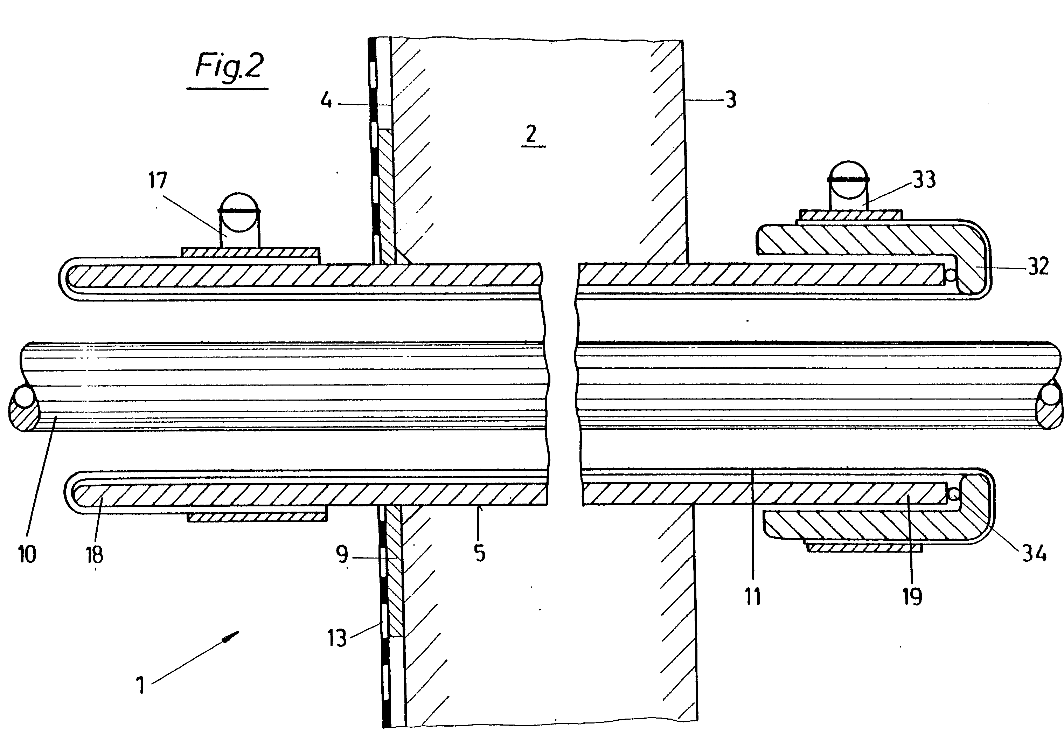

Fig. 2 zeigt eine Ausführungsform, bei der einerseits das Elastikteil 11 wie bei der Ausbildung nach Fig. 1 am Ende 18 festgelegt ist, während es am gegenüberliegenden Ende 19 drehbar gehalten ist. Bei der in Fig. 2 dargestellten Ausbildung ist das Elastikteil 11 als schlauchförmige Dichtungsbahn ausgebildet und über ein Drehteil 32 gestülpt, das seinerseits drehbar auf dem vorstehenden Ende 19 des Mantelrohres 8 gedreht werden kann. Über die Rohrschelle 33 wird dann die schlauchförmige Dichtungsbahn ähnlich dem gegenüberliegenden Ende 18 sicher festgelegt.

Zwischen dem Drehteil 32 und dem Mantelrohr 8 ist eine Rücklaufsicherung 34 vorgesehen, beispielsweise eine Ratschensicherung. Dadurch wird die einmal ausgeübte Verdrehung der schlauchförmigen Dichtungsbahn erhalten, ohne daß sie aufgrund der aufgebrachten Kräfte in ihre Ausgangslage zurückschnellen kann. Vorteilhaft ist die leichte und zweckmäßige Ausführung der Wandungsdurchführung, wobei die Rücklaufsicherung 34 so ausgebildet ist, daß bei Bedarf auch ein Rückdrehen des Drehteils 32 erreicht werden kann, beispielsweise um im nachhinein das Rohr bzw. Kabel 10 auswechseln zu können und zwar ohne großen Aufwand.

Fig. 2 zeigt im übrigen den Zeitpunkt, in dem das Elastikteil 11 noch lediglich zwischen den beiden Rohrschellen 17 und 33 eingespannt ist, ohne daß also das durchgezogene Rohr bzw. Kabel 10 fixiert ist.

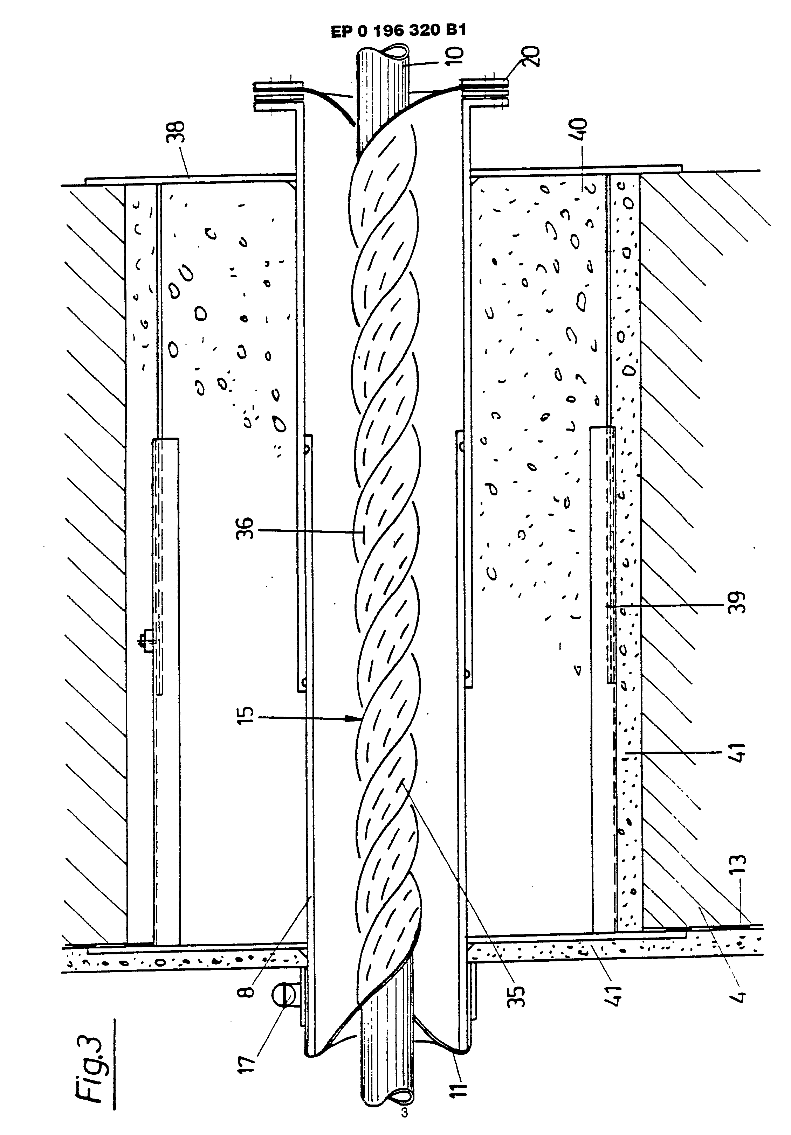

Fig. 3 schließlich zeigt eine Ausbildung, die insbesondere bei neu zu erstellenden Bauwerken von vornherein mit eingebracht werden kann. Dabei ist die Länge des das Mantelrohr 8 und das Elastikteil 11 aufnehmenden Kastens 38 leicht den vorgesehenen Wandstärken der Wandung 2 anzupassen. Hierzu sind die Wände als Schiebewand 39 ausgebildet, so daß es lediglich erforderlich ist, die Wände des Kastens 38 ineinanderzuschieben. Unter Umständen ist es zweckmäßig, den vorhandenen Hohlraum im Kasten 38 mit einer Hinterfüllung 40 zu versehen, um dem Kasten 38 größere Stabilität zu geben. Auch kann auf den Oberseiten des Kastens 38 ebenso wie auf der Außenwand 4 ein Isolierputz 41 aufgebracht werden, um für die notwendige Wasserdichtheit zusätzlich zu sorgen.

Außerdem sind bei Fig. 3 in dem schlauchförmigen Elastikteil 11 in Längsrichtung oder spiralförmig verlaufende Verstärkungsdrähte 35, 36 vorgesehen, um beispielsweise schwere Kabel aufnehmen zu können. Deutlich wird auch hier die Trompetenform der fertigen Dichtung 15 die die vorteilhafte Zugbelastbarkeit dieser Vorrichtung erbringt.

Das schlauchförmige Elastikteil 11 besteht entweder aus einem flexiblen Kunststoff oder aus dünnem Kupfer- oder sonstigem Blech oder einer Folie, die durch eine entsprechende Beschichtung ggf. verdrillungsfördernd ausgebildet werden kann.

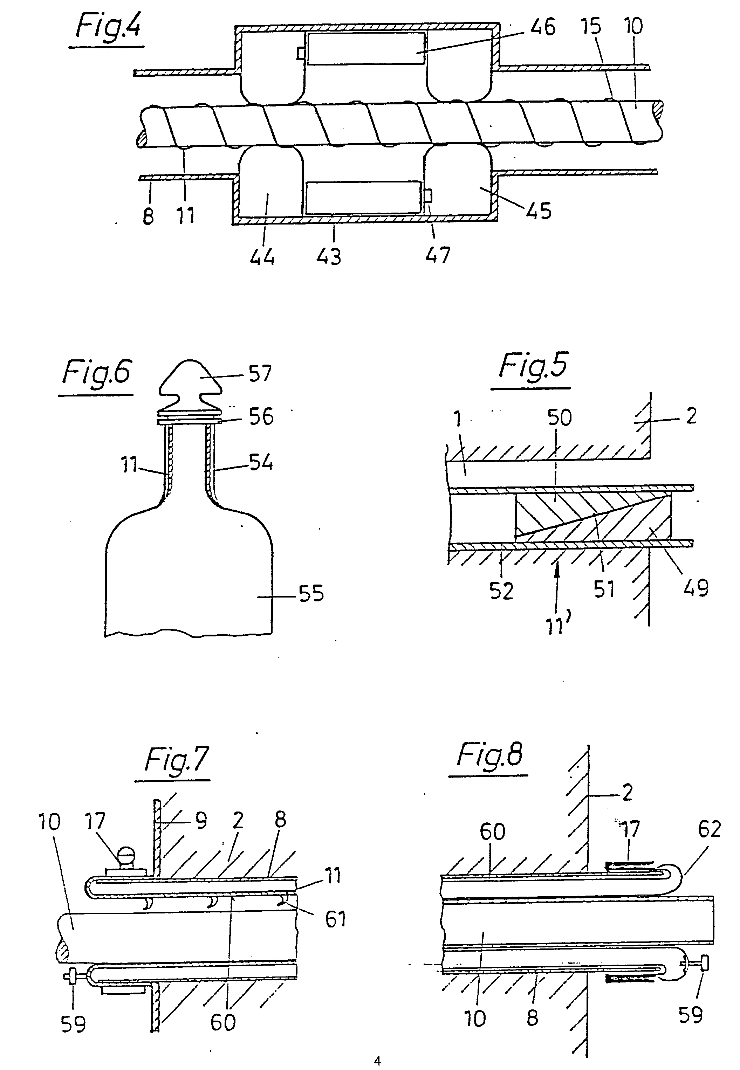

Fig. 4 gibt eine Ausbildung wieder, wobei zusätzlich zu der Torsionsdichtung 15 eine zusätzliche Abdichtung durch die in einer Ausbuchtung 43 des Mantelrohres 8 angeordneten ringförmigen Pneus 44, 45. Den Pneus 44, 45 sind Gaspatronen 46 zugeordnet, deren Verschlußkappe 47 beim Aufbringen der Torsionskräfte abgeschert werden, so daß das Gas dann die Pneus 44, 45 aufblähend in diese einströmen kann. Im Bereich der Einwirkung der Pneus 44, 45 wird das schlauchförmige Elastikteil 11 somit zusätzlich auf das Rohr 10 bzw. das Kabel aufgedrückt und so eine zusätzliche Dichtung erreicht.

Fig. 5 zeigt ein Elastikteil 11, über das ohne Verdrehen eine vorhandene Öffnung 1 verschlossen werden kann. Hierzu dienen zwei keilförmige Teile 49, 50, die im Bereich der Gwindefläche 51 gegeneinander verschiebbar sind. Mit 52 ist ein erweiterbares Stützrohr 52 bezeichnet, über das der beim Auseinanderschieben der keilförmigen Teile 49, 50 erreichbare Verschluß zusätzlich abgedichtet wird.

Eine Flasche kann wie Fig. 6 verdeutlicht über ein im Prinzip gleich ausgebildetes Elastikteil 11 wirksam verschlossen werden. Hierzu ist am unteren Teil des Halses 54 einer Flasche 55 ein schlauchförmiges Elastikteil 11 festgelegt. Das obere Ende dieses Elastikteils 11 ist über den Rand 56 hochgezogen und an einem Drehteil 57 festgelegt. Dieses Drehteil 57, beispielsweise ein als Ausgießer ausgebildeter Stopfen, wird verdreht, wodurch das im Hals 54 liegende Teil des Elastikteils 11 dichtend verschlossen wird. Das in der Flasche 55 vorgehaltene Medium ist so wirksam, d. h. auch geruchsicher gegen die Atmosphäre abgeschlossen und kann über lange Zeit vorgehalten werden. Wird über das Drehteil 57 das Elastikteil 11 zurückgedreht, kann das Medium den Verschluß passieren, ohne daß es notwendig ist, das Drehteil 57 abzunehmen. Soll die Flasche wiederbefüllt werden, ist es aber auch möglich, das Drehteil vom Elastikteil 11 abzuklemmen.

Die Fig. 7 und 8 zeigen eine Ausbildung einer Wandungsdurchführung mit einem Elastikteil 11, das über Druckluft oder durch Einfüllen von Kleber, Kunststoffmasse, Kunstharz oder Brandschutzmasse so aufgebläht werden kann, daß die Innenseite 60 nach ergänzendem Verdrehen dicht am Rohr 10 anliegt. Hierzu wird das Ventil 59 mit einem entsprechenden Befüllschlaub verbunden, wobei die auf der Innenseite 60 angebrachte Lippendichtung 61 zu einem zusätzlichen Abdichteffekt führt. Fig. 8 zeigt eine Ausbildung mit einem als Doppelschlauch 62 ausgebildeten Elastikteil 11, das mit dem Ventil 59 ausgerüstet ist.

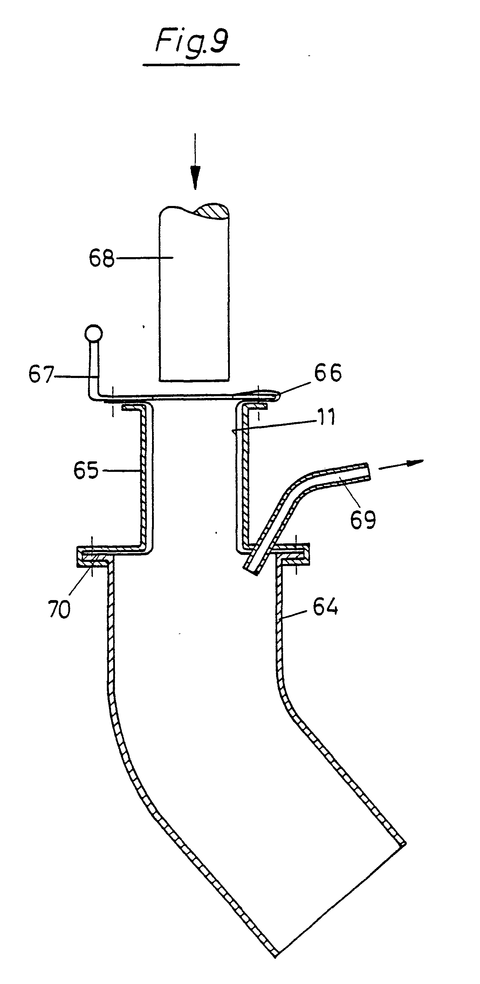

Fig. 9 schließlich zeigt eine Ausbildung, bei der beim Befüllen eines Tanks das verdrängte Gas gleichzeitig aufgefangen und abgeleitet werden kann. Hierzu ist dem Einfüllstutzen 64 ein aufklemmbarer Aufsatz 65 zugeordnet. Dieser Aufsatz 65 klemmt gleichzeitig das schlauchförmige Elastikteil 11 ein und dichtet auch das Entlüftungsrohr 69 ab, das beispielsweise zugleich auch über die Klemme 70 fixiert werden kann. Am oberen Ende des Aufsatzes 65 ist ein Drehring 66 mit Griff 67 angeordnet und gehalten, der seinerseits das obere Ende des schlauchförmigen Elastikteils 11 hält und beim Drehen mitnimmt, so daß die hier nicht wiedergegebene Dichtung 15 um das dann eingeführte Füllrohr 68 herum erreicht wird.

**Patentansprüche**

1. Vorrichtung zum Abdichten und/oder Verschließen von vorzugsweise runden Öffnungen (1) oder Durchführungen (5) in Wandungen (2) und Gehäusen mit einem in die Öffnung (1) eingeführten Mantelrohr (8) mit das Kabel oder Rohr (10) einfassender Packung, wobei das Mantelrohr (8) mit einem innenliegenden Elastikteil (11), das annähernd über die ganze Länge im Querschnitt veränderbar und dabei das Rohr (10) einspannend ausgebildet und in der Öffnung (1) eingespannt ist, dadurch gekennzeichnet, daß das Elastikteil (11) als schlaufförmige Dichtungsbahn ausgebildet und auf der einen Seite fest mit dem Mantelrohr (8), das gegen die Wandung (2) verdrehsicher abgestützt ist, und auf der anderen Seite über ein Klemm- und Drehteil (20, 32) mit dem Mantelrohr (8) verbunden ist.

2. Vorrichtung nach Anspruch 1, dadurch gekennzeichnet, daß das Elastikteil (11) als luftdicht geschlossener Doppelschlauch (62) ausgebildet ist, der am frei zugänglichen Ende (19) ein Ventil (59) aufweist.

3. Vorrichtung nach Anspruch 1 oder Anspruch 2, dadurch gekennzeichnet, daß das schlauchförmige Elastikteil (11) auf seiner dem Rohr (10) zugewandten Innenseite (60) eine spiralförmig verlaufende Lippendichtung (61) aufweist.

4. Vorrichtung nach Anspruch 1 oder Anspruch 2, dadurch gekennzeichnet, daß in einer Ausbuchtung (43) des Mantelrohres (8) rechtwinklig zur Schlauchachse wirksame ringförmige Pneus (44, 45) mit aktivierbarer Gaspatrone (46) angeordnet sind.

5. Vorrichtung nach Anspruch 1 oder Anspruch 2, dadurch gekennzeichnet, daß dem schlauchförmigen Elastikteil (11) ein dieses spiralförmig umgebendes Rückhalteband zugeordnet ist.

6. Vorrichtung nach Anspruch 1, dadurch gekennzeichnet, daß das Elastikteil (11) am Hals (54) einer Flasche (55) festgelegt und am anderen Ende mit einem auf dem Flaschenhals drehbeweglich angeordneten Drehteil (57) verbunden ist.

7. Vorrichtung nach Anspruch 1, dadurch gekennzeichnet, daß das Elastikteil (11) eine dauerelastische, dünnwandige Folie ist.

8. Vorrichtung nach Anspruch 1, dadurch gekennzeichnet, daß das schlauchförmige Elastikteil (11) endseitig um das über die Wandung (2) hinausgezogenen Mantelrohr (8) herumgestülpt und mit auf das Rohr (10) verspannbaren Rohrschelle (17) am Mantelrohr festgelegt ist.

9. Vorrichtung nach Anspruch 1, dadurch gekennzeichnet, daß das Elastikteil (11) über das auf dem Mantelrohr (8) drehbar angebrachtem Drehteil (32) gestülpt und daran oder in einer umlaufenden Nut (21) der Klemmscheibe (20) festgelegt ist.

10. Vorrichtung nach Anspruch 1, dadurch gekennzeichnet, daß zwischen Drehteil (32) bzw. Klemmscheibe (20) und Mantelrohr (8) eine einrastbare Rücklaufsicherung (34) angeordnet ist.

11. Vorrichtung nach Anspruch 1 oder Anspruch 2, dadurch gekennzeichnet, daß dem Elastikteil (11) in Längsrichtung verlaufende oder spiralförmig angeordnete Verstärkungsdrähte (35, 36) zugeordnet sind.

12. Vorrichtung nach Anspruch 1, dadurch gekennzeichnet, daß das Mantelrohr (8) aus zwei ineinandersteckbar ausgebildeten Kurzrohren (25, 26) besteht, die gegeneinander abgedichtet sind und mittig einen Flanschring (29) aufweisen.

13. Vorrichtung nach Anspruch 1, dadurch gekennzeichnet, daß dem Mantelrohr (8) ein außen aufgesetzter, eine parallel zur Außenwand (4) verlaufende Flanschwand aufweisender Flansch (9) zugeordnet ist.

14. Vorrichtung nach Anspruch 1 oder Anspruch 2, dadurch gekennzeichnet, daß das Elastikteil (11) innen und/oder außen mit einem Gleit- oder Dichtmittel versehen ist.

15. Vorrichtung nach Anspruch 1, dadurch gekennzeichnet, daß das Mantelrohr (8) mit innenliegendem Elastikteil (11) in einem bezüglich der Länge den Abmessungen der Wandung (2) anpaßbaren Kasten (38) untergebracht ist, der in der Höhe dem Mauerwerksraster entsprechend bemaßt ist.

**Claims**

1. Device for sealing and/or closing openings (1) being preferably circular or lead-throughs (5) in walls (2) and housings, the device comprising a tubular shell (8) introduced in the opening (1) with a packing enclosing the cable or tube (10), whereby the tubular shell (8) is encased in the opening (1) with an inner elastic part (11) which is variable in cross-section approximatively over all the length and thereby forms an excasement of the tube (10), characterized in that the elastic part (11) is formed of a loop-shaped sealing face, is fixedly connected on the one side to the tubular shell (8) which is supported against the wall (2) so as to withstand torsion, and is connected on the other side to the tubular shell (8) by means of a clamping and torsion part (20, 32).

2. Device according to claim 1, characterized in that the elastic part (11) is formed of a dual flexible tube (62) hermetically closed which comprises a valve (59) on the freely accessible end (19).

3. Device according to claim 1 or claim 2, characterized in that the elastic part (11) in form of a flexible tube comprises a lip seal (61) extending in form of a spiral on the inner side (60) of the elastic part turned towards the tube (10).

4. Device according to claim 1 oder claim 2, characterized in that acting annular tyres (44, 45) and actionable gas loaders (46) are arranged in a dinting (43) of the tubular shell (8), the dinting being right-angled relative to the axle of the flexible tube.

5. Device according to claim 1 oder claim 2, characterized in that, associated with the elastic part (11) in form of a flexible tube, a retension band in form of a spiral surrounds said elastic part.

6. Device according to claim 1, characterized in that the elastic part (11) is fixed to the neck (54) of a bottle (55) and is connected on the other end to a rotating part (57) which is rotatably movable on the neck of the bottle.

7. Device according to claim 1, characterized in that the elastic part (11) is a thin-walled foil of continuous elasticity.

8. Device according to claim 1, characterized in that the elastic part (11) in form of a flexible tube is turned round the tubular shell (8) drawn out from the wall (2) at the end side, and is fixed to the tubular shell (8) by clamping flange (17) adapted to be braced to the tube (10).

9. Device according to claim 1, characterized in that the elastic part (11) is turned round over the torsion part (32) adapted to rotate on the tubular shell (8), the clamping disk (20) being fixed thereon or in a circular groove (21).

10. Device according to claim 1, characterized in that a locking back-run safety device (34) is disposed between either the torsion part (32) or the clamping disk (20) and the tubular shell (8).

11. Device according to claim 1 oder claim 2, characterized in that reinforcing wires (35, 36) are associated with the elastic part (11), the wires extending in the longitudinal direction or forming a spiral.

12. Device according to claim 1, characterized in that the tubular shell (8) consists of two short tubes (25, 26) adapted to be fitted into one another, which are sealed against one another and comprise a central flanged ring (29).

13. Device according to claim 1, characterized in that a flange (9) positioned outwardly is associated with the tubular shell (8), the flange comprising a flange wall extending parallel to the outer wall (4).

14. Device according to claim 1 oder claim 2, characterized in that the elastic part (11) is provided inwardly and/or outwardly with sliding means or sealing means.

15. Device according to claim 1, characterized in that the tubular shell (8) is inserted together with the inner elastic part (11) in a casing adaptable to the longitudinal dimension of the wall (2) and dimensioned according to the height of the wall of masonry.

## Revendications

1. Dispositif pour étanchéiser et/ou obturer des ouvertures (1) de préférence circulaires ou des traversées (5) dans des parois (2) et des enceintes, de dispositif comportant un tube extérieur (8) introduit dans l'ouverture (1) avec un joint entourant le câble ou le tuyau (10), où le tube extérieur (8) est encastré dans l'ouverture (1) avec une partie élastique interne (11) qui est variable en section transversale approximativement sur toute la longueur et, de là, forme un encastrement du tuyau (10), caractérisé en ce que la partie élastique (11) est conçue en surface d'étanchéité en forme de boucle, est connectée d'un côté de façon non détachable au tube extérieur (8) qui est supporté contre la paroi (2) de façon à résister à la torsion, et est connectée de l'autre côté au tube extérieur (8) au moyen d'une partie de serrage et de torsion (20, 32).

2. Dispositif selon la revendication 1, caractérisé en ce que la partie élastique (11) est formée d'un double tuyau flexible (62) hermétiquement fermé qui comporte une valve (59) à l'extrémité librement accessible (19).

3. Dispositif selon la revendication 1 ou la revendication 2, caractérisé en ce que la partie élastique (11) en forme du tuyau flexible comporte une lèvre d'étanchéité (61) s'étendant en forme de spirale sur le côté intérieur (60) de la partie élastique tourné vers le tuyau (10).

4. Dispositif selon la revendication 1 ou la revendication 2, caractérisé en ce que des pneumatiques (44, 45) actifs annulaires et des chargeurs à gaz actionnables (46) sont disposés dans un renfoncement (43) du tube extérieur (8), le renfoncement étant à angles droits par rapport à l'axe du tuyau flexible (62).

5. Dispositif selon la revendication 1 ou la revendication 2, caractérisé en ce que, associée à la partie élastique (11) en forme de tuyau flexible, une bande de retenue entoure celle-ci sous forme de spirale.

6. Dispositif selon la revendication 1, caractérisé en ce que la partie élastique (11) est fixée au goulot (54) d'une bouteille (55) et est connectée, à l'autre extrémité, à une partie de rotation (57) qui est mobile sur le goulot de la bouteille autour d'un axe de rotation.

7. Dispositif selon la revendication 1, caractérisé en ce que la partie élastique (11) est une feuille à élasticité continue et à paroi mince.

8. Dispositif selon la revendication 1, caractérisé en ce que la partie élastique (11) en forme de tuyau flexible est retournée autour du tube extérieur (8) sorti hors de la paroi (2) à l'extrémité latérale, et est fixée au tube extérieur (8) par bride de serrage (17) adaptée pour être ancrée au tuyau (10).

9. Dispositif selon la revendication 1, caractérisé en ce que la partie élastique (11) est retournée au-dessus de la partie de torsion (32) adaptée pour tourner sur le tuyau extérieur (8) autour d'un axe, le disque de serrage (20) étant fixé dessus ou dans une gorge circulaire (21).

10. Dispositif selon la revendication 1, caractérisé en ce qu'un dispositif de sécurité à verrouillage de retour (34) est disposé entre la partie de torsion (32) ou le disque de serrage (20) et le tuyau extérieur (8).

11. Dispositif selon la revendication 1 ou la revendication 2, caractérisé en ce que des fils de renforcement (35, 36) sont associés à la partie élastique (11), ces fils s'étendant dans la direction longitudinale ou formant une spirale.

12. Dispositif selon la revendication 1, caractérisé en ce que le tube extérieur (8) consiste en deux tubes (25, 26) de longueur réduite adaptés pour s'emboîter l'un dans l'autre, qui sont étanchéisés l'un contre l'autre et comportent un anneau de bride (29) central.

13. Dispositif selon la revendication 1, caractérisé en ce qu'une bride (9) positionnée extérieurement est associée au tube extérieur (8), cette bride comportant une paroi de bride s'étendant parallèlement à la paroi extérieure (4).

14. Dispositif selon la revendication 1 ou la revendication 2, caractérisé en ce que la partie élastique (11) est pourvue intérieurement et/ou extérieurement d'un agent antifriction ou d'un agent d'étanchéité.

15. Dispositif selon la revendication 1, caractérisé en ce que le tube extérieur (8) avec la partie élastique interne (11) est inséré dans un encaissement (38) adaptable relativement à la dimension longitudinale de la paroi (2) et dimensionné selon la hauteur de l'ouvrage de maçonnerie.

Fig.1

EP 0 196 320 B1

Fig.2

32

33

34

19

11

3

2

5

4

9

13

17

1

18

10

2

*Fig.3*

Fig.4

Fig.6

Fig.5

Fig.7

Fig.8

## Fig.9